# EUROPÄISCHE PATENTSCHRIFT

(11) **EP 2 870 045 B1**
(45) Veröffentlichungstag und Bekanntmachung des Hinweises auf die Patenterteilung: **26.09.2018**
(21) Anmeldenummer: 13759148.3
(22) Anmeldetag: 19.08.2013
(51) Int. Cl.: B61L 11/00, B61L 19/06, B61L 11/08, H04W 4/80, B61L 27/00

(54) **VORORTBEDIENUNG EINER KOMPONENTE EINER EISENBAHNGLEISANLAGE**
LOCAL OPERATION OF A COMPONENT OF A RAILWAY TRACK SYSTEM
COMMANDE SUR SITE D'UN ÉLÉMENT D'UN RÉSEAU DE VOIES FERRÉES

(30) Priorität: 28.08.2012 DE 102012215260
(43) Veröffentlichungstag der Anmeldung: 13.05.2015
(73) Patentinhaber: Siemens Aktiengesellschaft, 80333 München (DE)
(72) Erfinder: SEIDLER, Gerald, 38302 Wolfenbüttel (DE); WEITNER-VON PEIN, Achim, 38126 Braunschweig (DE)
(86) Internationale Anmeldenummer: PCT/EP2013/067236
(87) Internationale Veröffentlichungsnummer: WO 2014/033001

(56) Entgegenhaltungen:
- EP-A1- 2 085 287
- EP-A2- 1 923 292
- EP-A2- 1 944 215
- EP-A2- 1 946 989
- WO-A1-2012/022613
- DE-A1- 19 508 731
- DE-A1- 19 905 916

## Beschreibung

Die Erfindung bezieht sich auf ein Verfahren zum Betreiben einer Eisenbahngleisanlage, bei dem eine Vorortbedienung einer Komponente der Eisenbahngleisanlage durch eine Bedienperson ermöglicht wird, wobei eine die Komponente der Eisenbahngleisanlage identifizierende Komponentenbenennung über eine Funkverbindung an eine Leit- oder Stellwerkseinrichtung übermittelt wird, in der Leit- oder Stellwerkseinrichtung die Komponentenkennung der Komponente überprüft wird und ein eine Vorortbedienung der Komponente freigebender Freigabebefehl erzeugt wird, wenn die Kennungsprüfung erfolgreich ist.

Ein derartiges Verfahren ist beispielsweise aus der Druckschrift DE 199 05 916 A1 bekannt.

Beim Betrieb einer räumlich ausgedehnten Eisenbahngleisanlage, die von einer Leit- oder Stellwerkseinrichtung überwacht und/oder gesteuert wird, ist es von Vorteil, wenn die Komponenten der Eisenbahngleisanlage, zumindest einige von ihnen, direkt vor Ort von einer Bedienperson gewartet, kontrolliert oder entstört werden können. In der Regel erfordert eine Vorortbedienung die örtliche Anwesenheit der Bedienperson sowie eine Kommunikation der Bedienpersonen mit der Leit- oder Stellwerkseinrichtung, um eine Gefährdung zu vermeiden. Die Kommunikation zwischen dem Personal in der Leit- oder Stellwerkseinrichtung sowie den Bedienpersonen vor Ort erfolgt dabei derzeit fernmündlich.

Der Erfindung liegt die Aufgabe zugrunde, ein Verfahren zum Betreiben einer Eisenbahngleisanlage anzugeben, bei dem eine Komponentenbedienung unter Mitwirkung von vor Ort befindlichen Bedienpersonen besonders sicher durchgeführt werden kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die die Komponente der Eisenbahngleisanlage identifizierende Komponentenkennung mit einem Mobilfunkendgerät über eine Nahfeldkommunikationsverbindung abgefragt und diese mit dem Mobilfunkendgerät über die Funkverbindung an die Leit- oder Stellwerkseinrichtung übermittelt wird.

Ein wesentlicher Vorteil des erfindungsgemäßen Verfahrens besteht darin, dass bei diesem mittels der erfindungsgemäß vorgesehenen Nahfeldkommunikation zwischen dem Mobilfunkendgerät und der zu bedienenden Komponente geprüft werden kann, ob sich die Bedienperson, die eine Bedienhandlung vornehmen oder auslösen will, tatsächlich in unmittelbarer Nähe zu der zu bedienenden Komponente befindet. Nur dann, wenn eine Nahfeldkommunikationsverbindung besteht oder bestanden hat, wird davon ausgegangen, dass die Bedienperson tatsächlich vor Ort ist und eine Bedienung der Komponente unter Mitwirkung der Bedienperson erlaubt werden kann. Mit anderen Worten besteht der erfindungsgemäße Gedanke also darin, dass die Vornahme von Bedienhandlungen oder eine Mitwirkung an Bedienhandlungen unterbunden werden kann, wenn sich die Bedienperson nicht nachweislich vor Ort befindet und die Bedienhandlung überwachen kann.

Die Nahfeldkommunikationsverbindung kann beispielsweise gemäß dem NFC (Near Field Communication)-Standard erfolgen. Bei der Funkverbindung handelt es sich vorzugsweise um eine Fernfeldverbindung, beispielsweise nach dem GSM-, GPRS-, UMTS oder EDGE-Standard.

Bei dem Mobilfunkendgerät kann es sich um ein sogenanntes "Handy" oder "Smartphone" handeln, das eine Nahfeld- und eine Fernfeldkommunikation ermöglicht (z. B. Google Nexus S und Galaxy S2 der Firma Samsung). Alternativ kann es sich bei dem Mobilfunkendgerät um einen tragbaren Computer, beispielsweise in Form eines Laptops oder Tablet-PCs handeln; in diesem Falle sind lediglich eine Nahfeldkommunikationskomponente und eine Funkkomponente für die Funkverbindung vorzusehen, die über Schnittstellen an den Computer angeschlossen werden.

Um sicherzustellen, dass die in der Leit- oder Stellwerkseinrichtung eingehenden Komponentenkennungen aktuell sind, wird es als vorteilhaft angesehen, wenn die Komponente als Komponentenkennung oder zusätzlich zu der Komponentenkennung einen signierten Zeitstempel zu dem Mobilfunkendgerät über die Nahfeldkommunikationsverbindung sendet und dieser signierte Zeitstempel über die Funkverbindung an die Leit- oder Stellwerkseinrichtung übermittelt wird, in der Leit- oder Stellwerkseinrichtung der signierte Zeitstempel auf Aktualität überprüft wird und der Freigabebefehl erzeugt wird, wenn der signierte Zeitstempel aktuell ist. Ein signierter Zeitstempel ermöglicht es, die an die Leit- oder Stellwerkseinrichtung übermittelte Komponentenkennung auf ihre zeitliche Aktualität hin zu überprüfen und festzustellen, wann sich die Bedienperson in unmittelbarer Nähe zu der zu bedienenden Komponente befunden hat.

Vorzugsweise wird in der Leit- oder Stellwerkseinrichtung außerdem geprüft, ob das Mobilfunkendgerät oder der für das Mobilfunkendgerät registrierte Besitzer zur Einflussnahme auf die betroffene Komponente berechtigt ist.

Um sicherzustellen, dass die Bedienperson bei Bedienhandlungen, die sich über einen längeren Zeitraum erstrecken, tatsächlich während der gesamten Bedienphase anwesend ist, wird es als vorteilhaft angesehen, wenn die beschriebene Kennungsüberprüfung bzw. die Signaturprüfung und die Erzeugung der Freigabebefehle regelmäßig oder unregelmäßig wiederholt werden.

Vorzugsweise ermöglicht der Freigabebefehl eine Fernsteuerung der Komponente über Steuerbefehle, insbesondere Sprachsteuerbefehle, die über die Funkverbindung vom Mobilfunkendgerät zu der Leit- oder Stellwerkseinrichtung übertragen werden.

Die Steuerbefehle oder Sprachsteuerbefehle, die vom Mobilfunkendgerät zu der Leit- oder Stellwerkseinrichtung übermittelt werden, werden von der Leit- oder Stellwerkseinrichtung vorzugsweise umgesetzt, indem diese Stellsignale über die Funkverbindung zu dem Mobilfunkendgerät sendet und das Mobilfunkendgerät die Stellsignale an die Komponente über die Nahfeldkommunikationsverbindung weiterleitet.

Alternativ können die Steuerbefehle oder Sprachsteuerbefehle, die vom Mobilfunkendgerät zu der Leit- oder Stellwerkseinrichtung übermittelt werden, von der Leit- oder Stellwerkseinrichtung umgesetzt werden, indem diese Stellsignale über eine das Mobilfunkendgerät ausschließende Verbindung an die Komponente übermittelt.

Bei der letztgenannten Variante wird es als vorteilhaft angesehen, wenn die Leit- oder Stellwerkseinrichtung die Stellsignale über eine die Leit- oder Stellwerkseinrichtung und die Komponente verbindende Steuerleitung überträgt.

Bei der Komponente, die vor Ort bedient werden soll, handelt es sich vorzugsweise um eine Schlüsselsperre, in der ein Schlüssel zur Vorortbedienung einer weiteren Komponente enthalten ist. Der Freigabebefehl gibt in diesem Falle vorzugsweise die Schlüsselsperre frei.

Vorzugsweise wird der Freigabebefehl zur Freigabe der Schlüsselsperre über die Funkverbindung von der Leit- oder Stellwerkseinrichtung zu dem Mobilfunkendgerät und von dort über die Nahfeldkommunikationsverbindung zur Schlüsselsperre übertragen.

Alternativ kann die Leit- oder Stellwerkseinrichtung den Freigabebefehl über eine die Schlüsselsperre und die Leit- oder Stellwerkseinrichtung verbindende Steuerleitung übertragen.

Die Erfindung bezieht sich darüber hinaus auf eine Komponente einer Eisenbahngleisanlage, insbesondere eine solche Komponente, die geeignet ist, durch eine Leit- oder Stellwerkseinrichtung der Eisenbahngleisanlage überwacht und/oder gesteuert zu werden.

Erfindungsgemäß ist vorgesehen, dass die Komponente eine Nahfeldkommunikationseinrichtung und eine mit der Nahfeldkommunikationseinrichtung verbundene Steuereinrichtung aufweist und die Steuereinrichtung geeignet ist, ein über die Nahfeldkommunikationsverbindung empfangenes Anfragesignal, mit dem eine die Komponente identifizierende Komponentenkennung abgefragt wird, zu verarbeiten und ein die Komponentenkennung der Komponente enthaltendes Kennungssignal, insbesondere ein Signatursignal, über die Nahfeldkommunikationsverbindung zu versenden.

Bezüglich der Vorteile der erfindungsgemäßen Komponente sei auf die obigen Ausführungen im Zusammenhang mit dem erfindungsgemäßen Verfahren verwiesen, da die Vorteile des erfindungsgemäßen Verfahrens denen der erfindungsgemäßen Komponente entsprechen.

Als vorteilhaft wird es angesehen, wenn die Komponente eine Schlüsselsperre ist, die von der Leit- oder Stellwerkseinrichtung zur Schlüsselfreigabe entsperrt werden kann.

Die Erfindung bezieht sich darüber hinaus auf eine Anordnung mit zumindest einer derartigen erfindungsgemäßen Komponente einer Eisenbahngleisanlage und mit einer Leit- oder Stellwerkseinrichtung zum Überwachen und Steuern der zumindest einen Komponente der Eisenbahngleisanlage. Erfindungsgemäß ist vorgesehen, dass die Leit- oder Stellwerkseinrichtung eine Rechnereinrichtung umfasst, die derart programmiert ist, dass sie nach Erhalt einer die Komponente der Eisenbahngleisanlage identifizierenden Komponentenkennung diese überprüft, und einen eine Vorortbedienung der Komponente freigebenden Freigabebefehl erzeugt, wenn die Kennungsüberprüfung erfolgreich ist.

Bezüglich der Vorteile der erfindungsgemäßen Leit- oder Stellwerkseinrichtung sei auf die obigen Ausführungen im Zusammenhang mit dem erfindungsgemäßen Verfahren verwiesen, da die Vorteile des erfindungsgemäßen Verfahrens denen der erfindungsgemäßen Leit- oder Stellwerkseinrichtung entsprechen.

Die Erfindung wird nachfolgend anhand von Ausführungsbeispielen näher erläutert; dabei zeigen beispielhaft
- Fig. 1: ein Ausführungsbeispiel für eine Anordnung mit einer Leit- oder Stellwerkseinrichtung zum Betreiben einer Eisenbahngleisanlage, wobei am Beispiel einer Schlüsselsperre ein Verfahren zum Nachweis der Vorortbefindlichkeit eines Mobilfunkendgeräts erläutert wird, wobei bei dem Verfahren das Weiterleiten eines Freigabebefehls zur Freigabe der Schlüsselsperre über eine Steuerleitung erfolgt,
- Fig. 2: das Weiterleiten eines Freigabebefehls zur Freigabe der Schlüsselsperre gemäß Figur 1 über eine Funkverbindung,
- Figur 3: ein Ausführungsbeispiel für eine Anordnung mit einer nur funkgesteuerten Schlüsselsperre,
- Fig. 4: ein weiteres Ausführungsbeispiel für eine Anordnung mit einer Leit- oder Stellwerkseinrichtung zum Betreiben einer Eisenbahngleisanlage, wobei am Beispiel einer Weiche beispielhaft ein Verfahren zum Nachweis der Vorortbefindlichkeit eines Mobilfunkendgeräts und zur Vorortbedienung der Weiche erläutert wird, wobei bei dem Verfahren Stellsignale von der Leit- oder Stellwerkseinrichtung über eine Steuerleitung zur Weiche übertragen werden,
- Fig. 5: anhand der Anordnung gemäß Figur 4 eine Verfahrensvariante, bei der Stellsignale von der Leitoder Stellwerkseinrichtung über das Mobilfunkendgerät zur Weiche übertragen werden, und
- Fig. 6: eine unmittelbare Steuerung der Weiche durch das Mobilfunkendgerät, wobei Stellsignale von dem Mobilfunkendgerät erzeugt und über eine Nahfeldkommunikationsverbindung zur Weiche übertragen werden.

In den Figuren werden der Übersicht halber für identische oder vergleichbare Komponenten stets dieselben Bezugszeichen verwendet.

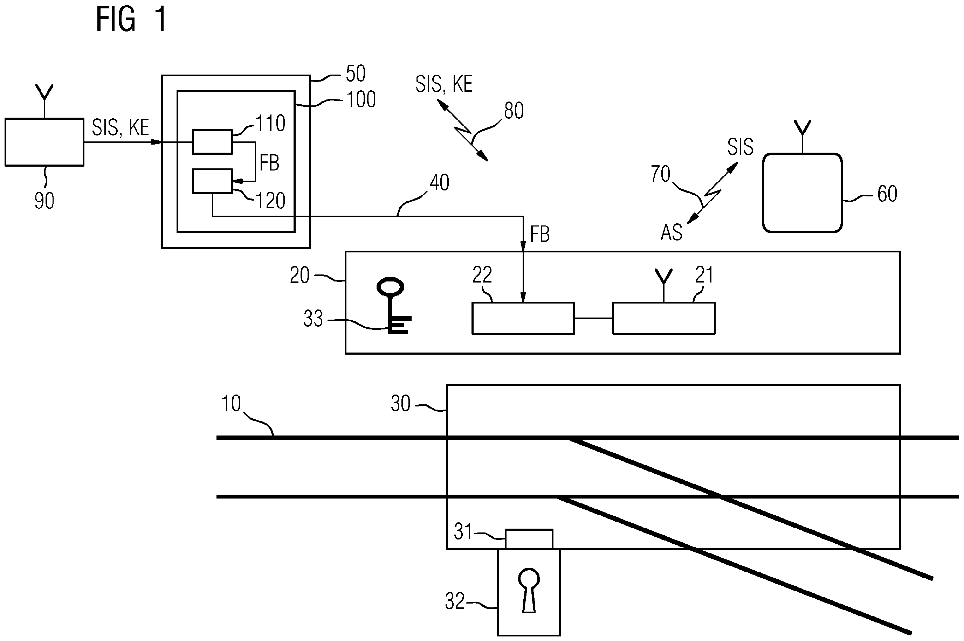

Die Figur 1 zeigt einen Abschnitt einer Eisenbahngleisanlage 10, von der man in der Figur 1 unter anderem eine erste Komponente in Form einer Schlüsselsperre 20 sowie eine zweite Komponente in Form einer Weiche 30 sieht.

Die Weiche 30 ermöglicht eine Vorortbedienung beispielsweise zu Wartungs-, Reparatur- oder Entstörungszwecken und ist hierzu mit einer Bedieneinrichtung 31 ausgestattet. Um sicherzustellen, dass die Bedieneinrichtung 31 ausschließlich von befugtem bzw. autorisiertem Personal bedient werden kann, weist die Weiche 30 darüber hinaus ein Schloss 32 auf, das die Bedieneinrichtung 31 vor unbefugtem Zugriff schützt. Um die Bedieneinrichtung 31 bedienen zu können, muss zuvor das Schloss 32 mittels eines Schlüssels 33 entsperrt werden. Der Schlüssel 33 zum Entsperren bzw. Entriegeln des Schlosses 32 befindet sich in der Schlüsselsperre 20, die den Schlüssel 33 verwahrt und vor einem unbefugten Zugriff Dritter schützt. Autorisiertes Bedienpersonal kann Zugriff zu dem Schlüssel 33 erhalten, indem die Schlüsselsperre 20 von zentraler Stelle aus geöffnet wird. Die Schlüsselsperre 20 steht hierzu über eine Steuerleitung 40 mit einer Leit- oder Stellwerkseinrichtung 50 in Verbindung.

Die Schlüsselsperre 20 gemäß Figur 1 ist darüber hinaus geeignet, mit einem vor Ort, also in unmittelbarer Nähe zur Schlüsselsperre 20 befindlichen Mobilfunkendgerät 60 zu kommunizieren. Hierzu weist die Schlüsselsperre 20 eine Nahfeldkommunikationseinrichtung 21 auf, die mit einer Steuereinrichtung 22 der Schlüsselsperre 20 zusammenwirkt. Mittels der Nahfeldkommunikationseinrichtung 21 kann die Schlüsselsperre 20 eine Nahfeldkommunikationsverbindung 70 mit dem Mobilfunkendgerät 60 unterhalten.

Die Nahfeldkommunikationseinrichtung 21 und die Steuereinrichtung 22 der Schlüsselsperre 20 können beispielsweise ein sogenanntes RFID-Tag bilden.

Die Nahfeldkommunikation kann beispielsweise auf dem so genannten NFC(Near Field Communication)-Standard basieren, wie er bei Mobilfunkendgeräten (z. B. Google Nexus S und Galaxy S2 der Firma Samsung) derzeit angeboten wird.

In der Figur 1 lässt sich außerdem erkennen, dass das Mobilfunkendgerät mit der Leit- oder Stellwerkseinrichtung 50 kommunizieren kann, und zwar über eine Funkverbindung 80. Die Funkverbindung 80 erfolgt bei der Darstellung gemäß Figur 1 über eine Funkeinrichtung 90, die als interne Komponente zu der Leit- oder Stellwerkseinrichtung 50 gehören kann oder alternativ eine separate externe Komponente sein kann, die mit der Leit- oder Stellwerkseinrichtung 50 über eine Verbindungsleitung in Verbindung steht, wie dies beispielhaft die Figur 1 zeigt.

Die Leit- oder Stellwerkseinrichtung 50 weist eine Rechnereinrichtung 100 auf, die aufgrund entsprechender Programmierung unter anderem ein Verifizierungsmodul 110 sowie ein Komponentensteuermodul 120 bildet.

Die Anordnung gemäß Figur 1 lässt sich beispielsweise wie folgt betreiben:
Will eine Bedienperson beispielsweise zu Wartungs-, Reparatur- oder Entstörzwecken auf die Bedieneinrichtung 31 der Weiche 30 einwirken, so benötigt sie hierzu den Schlüssel 33, der in das Schloss 32 eingeführt werden muss. Da sich der Schlüssel 33 bei dem in der Figur 1 gezeigten Betriebszustand in der Schlüsselsperre 20 befindet, muss die Bedienperson Zugriff auf den Schlüssel 33 erlangen und zunächst die Schlüsselsperre 20 entriegeln.

Um eine solche Entriegelung oder Freigabe der Schlüsselsperre 20 zu erreichen, wird die Bedienperson mittels des Mobilfunkendgerätes 60 eine Nahfeldkommunikationsverbindung 70 mit der Nahfeldkommunikationseinrichtung 21 der Schlüsselsperre 20 aufbauen und ein Anfragesignal AS an die Nahfeldkommunikationseinrichtung 21 sowie die Steuereinrichtung 22 übermitteln.

Mit dem Anfragesignal AS fordert das Mobilfunkendgerät 60 die Schlüsselsperre 20 dazu auf, eine die Schlüsselsperre 20 identifizierende Komponentenkennung an das Mobilfunkendgerät 60 zu übersenden. Vorzugsweise wird die Schlüsselsperre 20 die Komponentenkennung in Form einer Signatur übermitteln und als Kennungssignal, das die angefragte Komponentenkennung enthält oder angibt, ein die Signatur enthaltendes Signatursignal SIS an das Mobilfunkendgerät 60 übersenden.

Das Signatursignal SIS kann beispielsweise einen Zeitstempel enthalten, der mit einem in der Schlüsselsperre 20 abgespeicherten Signaturschlüssel signiert ist. Ein solcher signierter Zeitstempel gibt vorzugsweise die Uhrzeit an, zu der das Signatursignal SIS erzeugt worden ist. Durch die Signatur mit dem Signaturschlüssel ist das Signatursignal SIS der Schlüsselsperre 20 vor einer Verfälschung bzw. Manipulation, beispielsweise durch das Mobilfunkendgerät 60 geschützt.

Das Mobilfunkendgerät 60 wird nach Empfang des Signatursignals SIS dieses über die Funkverbindung 80 und die Funkeinrichtung 90 zu der Leit- oder Stellwerkseinrichtung 50 übertragen. Dabei wird das Mobilfunkendgerät 60 vorzugsweise auch eine eigene Kennung KE übermitteln, mit dem sich das Mobilfunkendgerät 60 gegenüber der Leit- oder Stellwerkseinrichtung 50 identifiziert.

Das Signatursignal SIS wird von der Rechnereinrichtung 100 bzw. durch das Verifizierungsmodul 110, das die Rechnereinrichtung 100 bildet, im Rahmen einer vorgegebenen Signaturprüfung überprüft. Im Rahmen dieser Signaturprüfung wird das Verifizierungsmodul 110 vorzugsweise prüfen, ob in dem Signatursignal SIS ein signierter Zeitstempel ist, der die Uhrzeit der Erzeugung des Signatursignals SIS angibt. Vorzugsweise wird das Verifizierungsmodul 110 einen Freigabebefehl FB zur Freigabe der Schlüsselsperre 20 nur dann erzeugen, wenn sowohl der in dem Signatursignal SIS enthaltene signierte Zeitstempel ausreichend aktuell ist als auch die Kennung KE ein Mobilfunkendgerät 60 identifiziert, das zur Öffnung der Schlüsselsperre 20 und/oder zur Bedienung der Weiche 30 berechtigt ist. Sind diese Bedingungen nicht erfüllt, so wird das Verifizierungsmodul 110 eine Freigabe verweigern und den Freigabebefehl FB nicht erzeugen.

Nachfolgend wird beispielsweise davon ausgegangen, dass die Signaturprüfung erfolgreich war und das Verifizierungsmodul 110 den Freigabebefehl FB erzeugt hat. Der Freigabebefehl FB gelangt von dem Verifizierungsmodul 110 zu dem Komponentensteuermodul 120, das den Freigabebefehl FB über die Steuerleitung 40 zur Schlüsselsperre 20 übermittelt.

Sobald die Steuereinrichtung 22 den Freigabebefehl FB über die Steuerleitung 40 erhalten hat, wird sie den darin befindlichen Schlüssel 33 freigeben, indem sie beispielsweise eine Verschlussklappe der Schlüsselsperre 20 entriegelt und dadurch den Schlüssel 33 zugänglich macht.

Sobald die Schlüsselsperre 20 entsperrt worden ist, kann der Inhaber des Mobilfunkendgeräts 60 den Schlüssel 33 entnehmen, das Schloss 32 entriegeln und die Bedieneinrichtung 31 der Weiche 30 zum Zwecke der Wartung, Reparatur oder Entstörung bedienen.

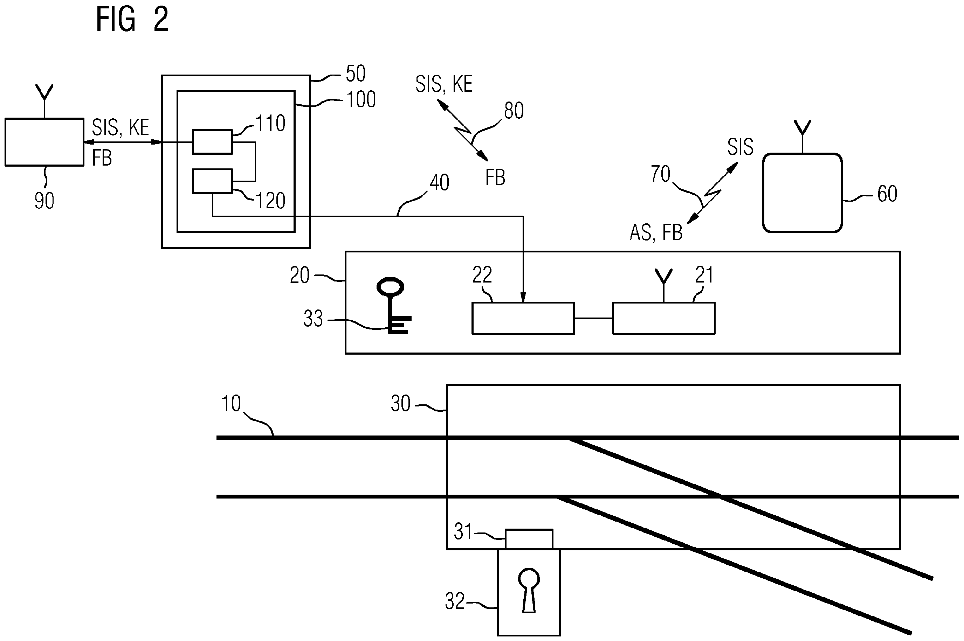

Die Figur 2 zeigt eine weitere Ausführungsvariante für den Betrieb der Schlüsselsperre 20 gemäß Figur 1. Bei dieser Ausführungsvariante wird der Freigabebefehl FB von dem Verifizierungsmodul 110 nicht über das Komponentensteuermodul 120 und die Steuerleitung 40 zur Schlüsselsperre 20 übertragen, sondern stattdessen - vorzugsweise in verschlüsselter Form - über die Funkverbindung 80 zum Mobilfunkendgerät 60. Sobald das Mobilfunkendgerät 60 den Freigabebefehl FB erhalten hat, wird es diesen über die Nahfeldkommunikationsverbindung 70 zur Nahfeldkommunikationseinrichtung 21 senden, von wo der Freigabebefehl FB zur Steuereinrichtung 22 gelangt. Sobald die Steuereinrichtung 22 den Freigabebefehl FB erhalten und erfolgreich entschlüsselt hat, wird sie die Schlüsselsperre 20 freigeben und Zugang zum Schlüssel 33 erlauben, wie dies im Zusammenhang mit der Figur 1 bereits erläutert worden ist.

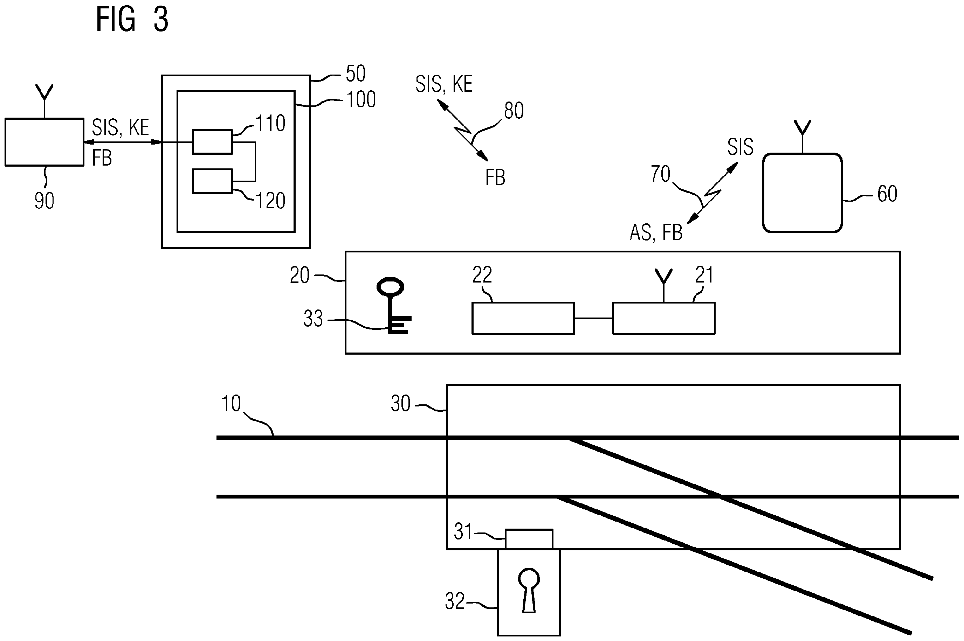

Da bei der Verfahrensvariante gemäß Figur 2 sowohl das Signatursignal SIS als auch der Freigabebefehl FB über die Funkverbindung 80 übertragen werden, ist eine Steuerleitung 40 zwischen der Leit- oder Stellwerkseinrichtung 50 und der Schlüsselsperre 20 nicht erforderlich. Eine solche Steuerleitung 40 kann beispielsweise entfallen, wie dies beispielhaft die Figur 3 zeigt.

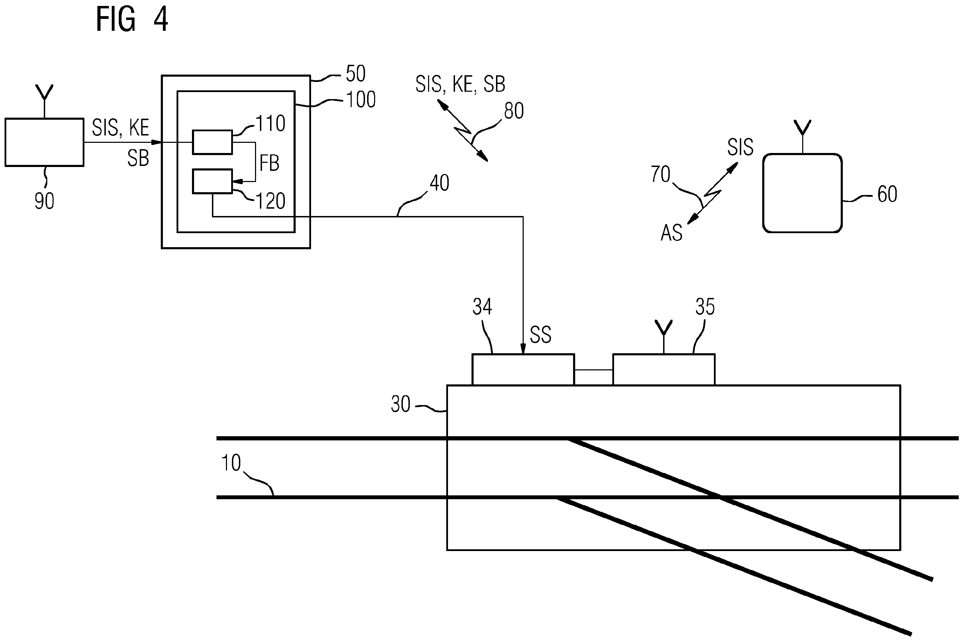

Die Figur 4 zeigt ein weiteres Ausführungsbeispiel für eine Anordnung, bei der eine Vorortbedienung durch eine Bedienperson möglich ist. Man erkennt eine Weiche 30, die mit einer Steuereinrichtung 34 sowie einer Nahfeldkommunikationseinrichtung 35 ausgestattet ist. Die Nahfeldkommunikationseinrichtung 35 ermöglicht eine Nahfeldkommunikationsverbindung 70 zwischen der Weiche 30 und einem Mobilfunkendgerät 60, das sich in unmittelbarer Nähe zur Weiche 30 befindet.

Will eine Bedienperson beispielsweise zu Wartungs-, Reparatur- oder Entstörungszwecken eine Vorortbedienung der Weiche 30 durchführen, so wird die Leit- oder Stellwerkseinrichtung 50 überprüfen, ob die Bedienperson bzw. das auf die Bedienperson registrierte Mobilfunkendgerät 60 sich in der Nähe der Weiche 30 befindet. Um eine solche Vorortprüfung auszulösen, wird das Mobilfunkendgerät 60 zunächst ein Anfragesignal AS erzeugen und über die Nahfeldkommunikationsverbindung 70 zur Nahfeldkommunikationseinrichtung 35 der Weiche 30 übersenden. Das Anfragesignal AS gelangt von dort zur Steuereinrichtung 34, die das Anfragesignal AS bearbeitet und ein Signatursignal SIS erzeugt. Das Signatursignal SIS kann beispielsweise einen signierten Zeitstempel enthalten, der die Uhrzeit der Signatursignalerzeugung in signierter Form enthält.

Das Signatursignal SIS wird über die Nahfeldkommunikationseinrichtung 35 zum Mobilfunkendgerät 60 gesandt und von dort über die Funkverbindung 80 zur Leit- oder Stellwerkseinrichtung 50 übermittelt. Bei der Übermittlung des Signatursignals SIS wird das Mobilfunkendgerät 60 vorzugsweise eine eigene Kennung KE übersenden, die die Identifizierung des Mobilfunkendgerätes erlaubt.

Nach Empfang des Signatursignals SIS wird das Verifizierungsmodul 110, das durch die Rechnereinrichtung 100 der Leit- oder Stellwerkseinrichtung 50 gebildet wird, das Signatursignal überprüfen und einen Freigabebefehl FB für das Komponentensteuermodul 120 erzeugen, wenn die Signaturprüfung erfolgreich war. Im Rahmen der Signaturprüfung wird das Verifizierungsmodul 110 vorzugsweise prüfen, ob sowohl der in dem Signatursignal SIS enthaltene signierte Zeitstempel aktuell ist als auch das Mobilfunkendgerät 60 bzw. dessen Besitzer zur Einflussnahme auf die Weiche 30 berechtigt ist. Nur wenn beide Bedingungen erfüllt sind, wird das Freigabesignal FB erzeugt.

Sobald das Komponentensteuermodul 120 den Freigabebefehl FB erhalten hat, wird es eine Fernbedienung bzw. Vorortbedienung durch das Mobilfunkendgerät 60 zulassen. Eine solche Vorortbedienung kann beispielsweise derart erfolgen, dass das Mobilfunkendgerät 60 Steuerbefehle SB an die Leit- oder Stellwerkseinrichtung 50 übermittelt, mit denen die Weiche 30 gesteuert, beispielsweise verstellt, werden soll. Die eingehenden Steuerbefehle SB wird das Komponentensteuermodul 120 der Leit- oder Stellwerkseinrichtung 50 auf Umsetzbarkeit prüfen und, falls die Steuerbefehle SB umsetzbar sind, entsprechende Stellsignale SS bilden, die über die Steuerleitung 40 zur Weiche 30 übermittelt werden.

Bei dem Ausführungsbeispiel gemäß Figur 4 erfolgt eine Bedienung der Weiche 30 vor Ort über eine Art Fernbedienung, die die Funkverbindung 80 sowie die Leit- oder Stellwerkseinrichtung 50 einbezieht. Die Steuerbefehle SB, die von dem Mobilfunkendgerät 60 erzeugt werden, werden von dem Komponentensteuermodul 120 zu Stellsignalen SS verarbeitet, die über die Steuerleitung 40 an die Steuereinrichtung 34 der Weiche 30 übermittelt werden, damit die Steuereinrichtung 34 diese umsetzen kann.

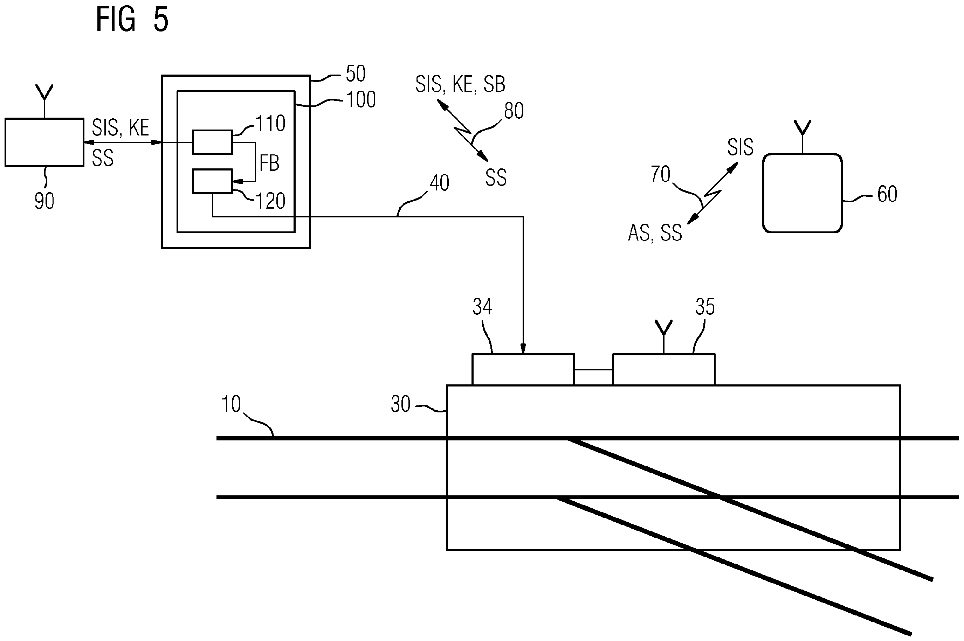

Alternativ zu einer Übertragung der Stellsignale SS über die Steuerleitung 40 kann auch eine Übertragung der Stellsignale SS über die Funkverbindung 80 erfolgen. Eine solche Ausgestaltung ist beispielhaft in der Figur 5 dargestellt.

In der Figur 5 erkennt man, dass das Komponentensteuermodul 120 nach Erhalt des Freigabebefehls FB durch das Verifizierungsmodul 110 eingehende Steuerbefehle SB zu Steuersignalen SS verarbeitet, die über die Funkeinrichtung 90 und die Funkverbindung 80 zum Mobilfunkendgerät 60 übermittelt werden. Das Mobilfunkendgerät 60 wird die Stellsignale SS nachfolgend über die Nahfeldkommunikationsverbindung 70 zur Nahfeldkommunikationseinrichtung 35 übertragen, die diese an die Steuereinrichtung 34 zwecks Umsetzung weiterleitet.

Um zu verhindern, dass das Mobilfunkendgerät 60 die Stellsignale SS selbsttätig und ohne Kenntnis bzw. Mitwirkung der Leit- oder Stellwerkseinrichtung 50 erzeugt, erfolgt die Bildung der Stellsignale SS vorzugsweise in verschlüsselter Form, so dass die Steuereinrichtung 34 der Weiche 30 prüfen kann, ob die Stellsignale SS tatsächlich von der Leit- oder Stellwerkseinrichtung 50 kommen bzw. durch diese autorisiert sind.

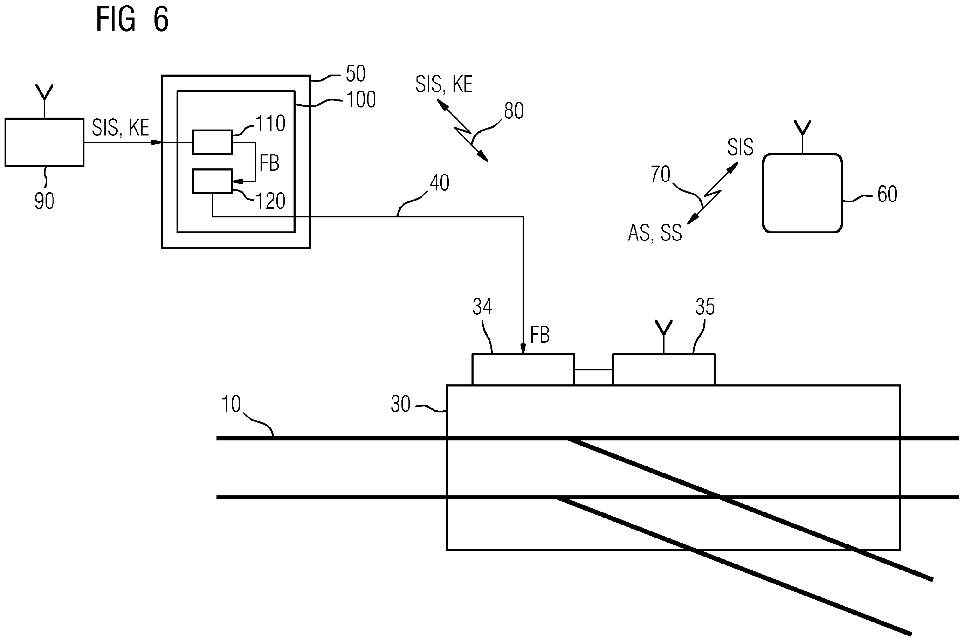

Die im Zusammenhang mit der Figur 5 beschriebene Übertragung der Steuersignale SS von der Leit- oder Stellwerkseinrichtung 50 über die Funkverbindung 80 und das Mobilfunkendgerät 60 zur Nahfeldkommunikationseinrichtung 50 kann auch ersetzt werden durch eine unmittelbare Übertragung der Steuerbefehle SB an die Weiche 30. Dies zeigt beispielhaft die Figur 6.

Bei dem Ausführungsbeispiel gemäß Figur 6 erfolgt die Signaturprüfung durch das Verifizierungsmodul 110 beispielsweise genau so, wie dies im Zusammenhang mit den Figuren 4 und 5 erläutert worden ist. Nachdem das Verifizierungsmodul 110 den Freigabebefehl FB erzeugt hat, wird das Komponentensteuermodul 120 den Freigabebefehl FB über die Steuerleitung 40 an die Steuereinrichtung 34 weiterleiten. Damit wird die Steuereinrichtung 34 zum Empfang weiterer Stellsignale SS, die über die Nahfeldkommunikationsverbindung 70 vom Mobilfunkendgerät 60 kommen, freigeschaltet. Das Mobilfunkendgerät 60 hat somit nach erfolgreicher Signaturprüfung und nach Eingang des Freigabebefehls FB in der Steuereinrichtung 34 die Möglichkeit, Stellsignale SS selbsttätig zu erzeugen und über die Nahfeldkommunikationsverbindung 70 zur Nahfeldkommunikationseinrichtung 35 und damit zur Steuereinrichtung 34 unmittelbar zu übersenden. Eine unmittelbar Steuerung der Weiche 30 durch das Mobilfunkendgerät 60 bzw. durch deren Stellsignale SS wird die Leit- oder Stellwerkseinrichtung 50 vorzugsweise nur dann erlauben, wenn sie durch entsprechende andere Sicherungsmaßnahmen sichergestellt hat, dass die Weiche 30 von der Bedienperson vor Ort in beliebiger Weise betätigt, beispielsweise verstellt werden kann, ohne dass dies die Sicherheit der Eisenbahngleisanlage 10 beeinträchtigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Eisenbahngleisanlage
- 20: Schlüsselsperre
- 21: Nahfeldkommunikationseinrichtung
- 22: Steuereinrichtung
- 30: Weiche
- 31: Bedieneinrichtung
- 32: Schloss
- 33: Schlüssel
- 34: Steuereinrichtung
- 35: Nahfeldkommunikationseinrichtung
- 40: Steuerleitung
- 50: Leit- oder Stellwerkseinrichtung
- 60: Mobilfunkendgerät
- 70: Nahfeldkommunikationsverbindung
- 80: Funkverbindung
- 90: Funkeinrichtung
- 100: Rechnereinrichtung
- 110: Verifizierungsmodul
- 120: Komponentensteuermodul

- AS: Anfragesignal
- FB: Freigabebefehl
- KE: Kennung
- SB: Steuerbefehl
- SIS: Signatursignal
- SS: Stellsignal

## Patentansprüche

1. Verfahren zum Betreiben einer Eisenbahngleisanlage (10), bei dem eine Vorortbedienung einer Komponente (20, 30) der Eisenbahngleisanlage (10) ermöglicht wird, wobei
- eine die Komponente (20, 30) der Eisenbahngleisanlage (10) identifizierende Komponentenkennung über eine Funkverbindung (80) an eine Leit- oder Stellwerkseinrichtung (50) übermittelt wird,
- in der Leit- oder Stellwerkseinrichtung (50) die Komponentenkennung der Komponente (20, 30) überprüft wird und
- ein eine Vorortbedienung der Komponente (20, 30) freigebender Freigabebefehl (FB) erzeugt wird, wenn die Kennungsüberprüfung erfolgreich ist,
**dadurch gekennzeichnet, dass** die die Komponente (20, 30) der Eisenbahngleisanlage (10) identifizierende Komponentenkennung mit einem Mobilfunkendgerät (60) über eine Nahfeldkommunikationsverbindung (70) abgefragt und diese mit dem Mobilfunkendgerät (60) über die Funkverbindung (80) an die Leit- oder Stellwerkseinrichtung (50) übermittelt wird.

2. Verfahren nach Anspruch 1,
**dadurch gekennzeichnet, dass**
- die Komponente (20, 30) als Komponentenkennung oder zusätzlich zu der Komponentenkennung einen signierten Zeitstempel zu dem Mobilfunkendgerät (60) über die Nahfeldkommunikationsverbindung (70) sendet und dieser signierte Zeitstempel über die Funkverbindung (80) an die Leit- oder Stellwerkseinrichtung (50) übermittelt wird,
- in der Leit- oder Stellwerkseinrichtung (50) der signierte Zeitstempel auf Aktualität überprüft wird und
- der Freigabebefehl (FB) erzeugt wird, wenn der signierte Zeitstempel aktuell ist und das Mobilfunkendgerät (60) oder der für das Mobilfunkendgerät (60) registrierte Besitzer zur Einflussnahme auf die Komponente (20, 30) berechtigt ist.

3. Verfahren nach Anspruch 1 oder 2,
**dadurch gekennzeichnet, dass**
der Freigabebefehl (FB) eine Fernsteuerung der Komponente (20, 30) über Steuerbefehle (SB), insbesondere Sprachsteuerbefehle, ermöglicht, die über die Funkverbindung (80) vom Mobilfunkendgerät (60) zu der Leit- oder Stellwerkseinrichtung (50) übertragen werden.

4. Verfahren nach einem der voranstehenden Ansprüche,
**dadurch gekennzeichnet, dass**
die Steuerbefehle (SB) oder Sprachsteuerbefehle, die vom Mobilfunkendgerät (60) zu der Leit- oder Stellwerkseinrichtung (50) übermittelt werden, von der Leit- oder Stellwerkseinrichtung (50) umgesetzt werden, indem diese Stellsignale (SS) über die Funkverbindung (80) zu dem Mobilfunkendgerät (60) sendet und das Mobilfunkendgerät (60) die Stellsignale (SS) an die Komponente (20, 30) über die Nahfeldkommunikationsverbindung (70) weiterleitet.

5. Verfahren nach einem der voranstehenden Ansprüche 1 bis 3,
**dadurch gekennzeichnet, dass**
die Steuerbefehle (SB) oder Sprachsteuerbefehle, die vom Mobilfunkendgerät (60) zu der Leit- oder Stellwerkseinrichtung (50) übermittelt werden, von der Leit- oder Stellwerkseinrichtung (50) umgesetzt werden, indem diese Stellsignale (SS) über eine das Mobilfunkendgerät (60) ausschließende Verbindung an die Komponente (20, 30) übermittelt.

6. Verfahren nach Anspruch 5,
**dadurch gekennzeichnet, dass**
die Leit- oder Stellwerkseinrichtung (50) die Stellsignale (SS) über eine die Leit- oder Stellwerkseinrichtung (50) und die Komponente (20, 30) verbindende Steuerleitung (40) überträgt.

7. Verfahren nach einem der voranstehenden Ansprüche,
**dadurch gekennzeichnet, dass**
- die Komponente eine Schlüsselsperre (20) ist, in der ein Schlüssel (33) zur Vorortbedienung einer weiteren Komponente (30) enthalten ist, und
- der Freigabebefehl (FB) die Schlüsselsperre (20) freigibt.

8. Verfahren nach Anspruch 7,
**dadurch gekennzeichnet, dass**
der Freigabebefehl (FB) zur Freigabe der Schlüsselsperre (20) über die Funkverbindung (80) von der Leit- oder Stellwerkseinrichtung (50) zu dem Mobilfunkendgerät (60) und von dort über die Nahfeldkommunikationsverbindung (70) zur Schlüsselsperre (20) übertragen wird.

9. Verfahren nach Anspruch 7,
**dadurch gekennzeichnet, dass**
die Leit- oder Stellwerkseinrichtung (50) den Freigabebefehl (FB) über eine die Schlüsselsperre (20) und die Leit- oder Stellwerkseinrichtung (50) verbindende Steuerleitung (40) überträgt.

10. Komponente (20, 30) einer Eisenbahngleisanlage (10),
**dadurch gekennzeichnet, dass**
- die Komponente (20, 30) eine Nahfeldkommunikationseinrichtung (21, 35) und eine mit der Nahfeldkommunikationseinrichtung (21, 35) verbundene Steuereinrichtung (22, 34) aufweist und
- die Steuereinrichtung (22, 34) geeignet ist, ein über die Nahfeldkommunikationsverbindung (70) empfangenes Anfragesignal (AS), mit dem eine die Komponente (20, 30) identifizierende Komponentenkennung abgefragt wird, zu verarbeiten und ein die Komponentenkennung der Komponente (20, 30) enthaltendes Kennungssignal über die Nahfeldkommunikationsverbindung (70) zu versenden.

11. Komponente (20, 30) nach Anspruch 10,
**dadurch gekennzeichnet, dass**
die Komponente eine Schlüsselsperre (20) ist, die von der Leit- oder Stellwerkseinrichtung (50) zur Schlüsselfreigabe entsperrt werden kann.

12. Anordnung mit zumindest einer Komponente (20, 30) einer Eisenbahngleisanlage (10) nach einem der Ansprüche 10 oder 11 und mit einer Leit- oder Stellwerkseinrichtung (50) zum Überwachen und Steuern der zumindest einen Komponente (20, 30) der Eisenbahngleisanlage (10),
**dadurch gekennzeichnet, dass**
die Leit- oder Stellwerkseinrichtung (50) eine Rechnereinrichtung (100) umfasst, die derart programmiert ist, dass
- sie nach Erhalt einer die Komponente (20, 30) der Eisenbahngleisanlage (10) identifizierenden Komponentenkennung diese überprüft, und
- einen eine Vorortbedienung der Komponente (20, 30) freigebenden Freigabebefehl (FB) erzeugt, wenn die Kennungsüberprüfung erfolgreich ist.

## Claims

1. Method for operating a railroad track system (10), wherein local operation of a component (20, 30) of the railroad track system (10) is enabled, wherein
- a component ID identifying the component (20, 30) of the railroad track system (10) is transmitted via a radio link (80) to a control or interlocking facility (50),
- in the control or interlocking facility (50) the component ID of the component (20, 30) is checked and
- an enable command (FB) enabling local operation of the component (20, 30) is generated if the ID check is successful,
**characterised in that**
the mobile communication device (60) uses a short-range communication link (70) to request the component ID identifying the component (20, 30) of the railroad track system (10) and the mobile communication device (60) transmits this component ID via a radio link (80) to the control or interlocking facility (50).

2. Method according to claim 1,
**characterised in that**
- the component (20, 30) transmits as a component ID or in addition to the component ID a signed time stamp to the mobile communication device (60) via the short-range communication link (70) and this signed time stamp is transmitted via the radio link (80) to the control or interlocking facility (50),
- in the control or interlocking facility (50) the signed time stamp is checked to ascertain if it is current and
- the enable command (FB) is generated if the signed time stamp is current and the mobile communication device (60) or the user to which the mobile communication device (60) is registered is authorised to exercise control over the component (20, 30).

3. Method according to claim 1 or 2,
**characterised in that**
the enable command (FB) allows remote control of the component (20, 30) by control commands (SB), in particular voice control commands, which are transmitted from the mobile communication device (60) to the control or interlocking facility (50) via the radio link (80).

4. Method according to one of the preceding claims,
**characterised in that**
the control commands (SB) or voice control commands which are transmitted from the mobile communication device (60) to the control or interlocking facility (50) are implemented by the control or interlocking facility (50) by the latter transmitting actuating signals (SS) to the mobile communication device (60) via the radio link (80) and the mobile communication device (60) forwarding the actuating signals (SS) to the component (20, 30) via the short-range communication link (70).

5. Method according to one of the preceding claims 1 to 3,
**characterised in that**
the control commands (SB) or voice control commands which are transmitted from the mobile communication device (60) to the control or interlocking facility (50) are implemented by the control or interlocking facility (50) by the latter transmitting actuating signals (SS) to the component (20, 30) via a link excluding the mobile communication device (60).

6. Method according to claim 5,
**characterised in that**
the control or interlocking facility (50) transmits the actuating signals (SS) via a control cable (40) interconnecting the control or interlocking facility (50) and the component (20, 30).

7. Method according to one of the preceding claims, **characterised in that**
- the component is a keylock device (20) containing a key (33) for local operation of another component (30), and
- the enable command (FB) releases the keylock device (20).

8. Method according to claim 7,
**characterised in that**
the enable command (FB) for releasing the keylock device (20) is transmitted via the radio link (80) from the control or interlocking facility (50) to the mobile communication device (60) and from there to the keylock device (20) via the short-range communication link (70).

9. Method according to claim 7,
**characterised in that**
the control or interlocking facility (50) transmits the enable command (FB) via a control cable (40) interconnecting the keylock device (20) and the control or interlocking facility (50) .

10. Component (20, 30) of a railroad track system (10), **characterised in that**
- the component (20, 30) has a short-range communication device (21, 35) and a control device (22, 34) connected to the short-range communication device (21, 35) and
- the control device (22, 34) is suitable for processing a interrogator signal (AS) received via the short-range communication link (70) and requesting a component ID identifying the component (20, 30), and for transmitting an ID signal containing the component ID of the component (20, 30) via the short-range communication link (70).

11. Component (20, 30) according to claim 10,
**characterised in that**
the component is a keylock device (20) which can be unlocked by the control or interlocking facility (50) to release the key.

12. Arrangement comprising at least one component (20, 30) of a railroad track system (10) according to one of claims 10 or 11 and comprising a control or interlocking facility (50) for monitoring and controlling the at least one component (20, 30) of the railroad track system (10),
**characterised in that**
the control or interlocking facility (50) comprises a computer device (100) which is programmed such that
- when it receives a component ID identifying a component (20, 30) of the railroad track system (10), it checks it, and
- generates an enable command (FB) enabling local operation of the component (20, 30) if the ID check is successful.

## Revendications

1. Procédé pour faire fonctionner un réseau (10) de voies ferrées, dans lequel on rend possible un service sur site d'un élément (20, 30) du réseau de voies ferrées, dans lequel
- on transmet une caractérisation de l'élément identifiant l'élément (20, 30) du réseau (10) de voies ferrées à un dispositif (50) de conduite ou d'aiguillage, par une liaison (80) radio,
- on contrôle, dans le dispositif (50) de conduite ou d'aiguillage, la caractérisation de l'élément (20, 30) et
- on produit une instruction (FB) de libération, libérant le service sur site de l'élément (20, 30), si le contrôle de la caractérisation est couronné de succès,
**caractérisé en ce que**
on demande la caractérisation de l'élément identifiant l'élément (20, 30) du réseau de voies ferrées par un appareil terminal de téléphonie mobile, par l'intermédiaire d'une liaison (70) de communication en champ proche et on la transmet, par l'appareil (60) terminal de téléphonie mobile, au dispositif (50) de conduite ou d'aiguillage, par l'intermédiaire de la liaison (80) radio.

2. Procédé suivant la revendication 1,
**caractérisé en ce que**
- l'élément (20, 30) envoie, comme caractérisation d'élément ou en plus de la caractérisation d'élément, un horodatage signé à l'appareil (60) terminal de téléphonie mobile par l'intermédiaire de la liaison (70) de communication en champ proche et on transmet cet horodatage signé au dispositif (50) de conduite ou d'aiguillage, par l'intermédiaire de la liaison (80) radio,
- dans le dispositif (50) de conduite ou d'aiguillage, on contrôle la mise à jour de l'horodatage signé et
- on produit l'instruction (FB) de libération si l'horodatage signé est à jour et l'appareil (60) terminal de téléphonie mobile ou le possesseur enregistré de l'appareil (60) terminal de téléphonie mobile est autorisé à influer sur l'élément (20, 30).

3. Procédé suivant la revendication 1 ou 2,
**caractérisé en ce que**
l'instruction (FB) de libération rend possible une télécommande de l'élément (20, 30), par des instructions (SB) de commande, notamment par des instructions de commande vocales, qui sont transmises, par l'intermédiaire de la liaison (80) radio, de l'appareil (60) terminal de téléphonie mobile au dispositif (50) de conduite ou d'aiguillage.

4. Procédé suivant l'une des revendications précédentes,
**caractérisé en ce que**
les instructions (SB) de commande ou les instructions de commande vocales, qui sont transmises de l'appareil (60) terminal de téléphonie mobile au dispositif (50) de conduite ou d'aiguillage, sont transformées par le dispositif (50) de conduite ou d'aiguillage, par le fait que celui-ci envoie des signaux (SS) d'aiguillage par l'intermédiaire de la liaison (80) radio à l'appareil (60) terminal de téléphonie mobile et par le fait que l'appareil (60) terminal de téléphonie mobile achemine les signaux (SS) d'aiguillage à l'élément (20, 30) par l'intermédiaire de la liaison (70) de communication en champ proche.

5. Procédé suivant l'une des revendications précédentes 1 à 3,
**caractérisé en ce que**
les instructions (SB) de commande ou les instructions de commande vocales, qui sont transmises de l'appareil (60) terminal de téléphonie mobile au dispositif (50) de conduite ou d'aiguillage, sont transformées par le dispositif (50) de conduite ou d'aiguillage, par le fait que celui-ci transmet des signaux (SS) d'aiguillage à l'élément (20, 30) par une liaison excluant l'appareil (60) terminal de téléphonie mobile.

6. Procédé suivant la revendication 5,
**caractérisé en ce que**
le dispositif (50) de conduite ou d'aiguillage transmet les signaux (SS) d'aiguillage par l'intermédiaire d'une ligne (40) de commande reliant le dispositif (50) de conduite ou d'aiguillage et l'élément (20, 30).

7. Procédé suivant l'une des revendications précédentes,
**caractérisé en ce que**
- l'élément est un blocage (20) à clé, dans lequel une clé (33) est contenue pour le service sur site d'un autre élément (30) et
- l'instruction (FB) de libération libère le blocage (20) à clé.

8. Procédé suivant la revendication 7,
**caractérisé en ce que**
l'on transmet l'instruction (FB) de libération pour libérer le blocage (20) à clé par l'intermédiaire de la liaison (80) radio du dispositif (50) de conduite ou d'aiguillage à l'appareil (60) terminal de téléphonie mobile et de là, par l'intermédiaire de la liaison (70) de communication en champ proche, au blocage (20) à clé.

9. Procédé suivant la revendication 7,
**caractérisé en ce que**
le dispositif (50) de conduite ou d'aiguillage transmet l'instruction (FB) de libération par l'intermédiaire d'une ligne (40) de commande reliant le blocage (20) à clé et le dispositif (50) de conduite ou d'aiguillage.

10. Elément (20, 30) d'un réseau (10) de voies ferrées,
**caractérisé en ce que**
- l'élément (20, 30) a un dispositif (21, 35) de communication en champ proche et un dispositif (22, 34) de commande relié au dispositif (21, 35) de communication en champ proche et
- le dispositif (22, 34) de commande est propre à traiter un signal (AS) de demande, qui est reçu par l'intermédiaire de la liaison (70) de communication en champ proche et par lequel une caractérisation d'un élément identifiant l'élément (20, 30) est demandée, et à envoyer, par l'intermédiaire de la liaison (70) de communication en champ proche, un signal de caractérisation contenant la caractérisation de l'élément (20, 30).

11. Elément (20, 30) suivant la revendication 10,
**caractérisé en ce que**
l'élément est un blocage (20) à clé, qui, pour se libérer de la clé, peut être débloqué par le dispositif (50) de conduite ou d'aiguillage.

12. Système, comprenant au moins un élément (20, 30) d'un réseau (10) de voies ferrées suivant l'une des revendications 10 ou 11 et un dispositif (50) de conduite ou d'aiguillage pour contrôler et commander le au moins un élément (20, 30) du réseau (10) de voies ferrées,
**caractérisé en ce que**
le dispositif (50) de conduite ou d'aiguillage comprend un dispositif (100) informatique programmé de manière à
- après réception d'une caractérisation d'élément identifiant l'élément (20, 30) du réseau de voies ferrées, contrôler celle-ci et
- produire une instruction (FB) de libération libérant le service sur site de l'élément (20, 30) si le contrôle de la caractérisation est couronné de succès.
